# EUROPEAN PATENT SPECIFICATION

(11) **EP 0 323 911 B1**
(45) Date of publication and mention of the grant of the patent: **24.02.1993**
(21) Application number: 89300105.7
(22) Date of filing: 06.01.1989
(51) Int. Cl.: G11B 20/12, G11B 20/18

(54) **Recording digital signals**
Aufzeichnung digitaler Signale
Enregistrement de signaux digitaux

(30) Priority: 08.01.1988 GB 8800350
(43) Date of publication of application: 12.07.1989
(73) Proprietor: Hewlett-Packard Limited, Wokingham, Berkshire RG11 3LL (GB); SONY CORPORATION, Tokyo 141 (JP)
(72) Inventor: Odaka, Kentaro c/o Patents Division, Shinagawa-ku Tokyo 141 (JP); Ozaki, Shinya c/o Patents Division, Shinagawa-ku Tokyo 141 (JP); Milthorp, Brian, Wokingham Berkshire RG11 3LL (GB)
(74) Representative: Pilch, Adam John Michael

(56) References cited:
- EP-A- 0 133 726
- US-A- 4 533 963
- 8012 SMPTE JOURNAL, vol. 96, no. 2, February 1987, pages 171-176, White Plains, New York, US; K. DAVIES: "Formatting and Coding the Audio in the DTTR", page 174; third paragraph; figures 1, 12

## Description

This invention relates to apparatus for and methods of recording and/or reproducing digital signals.

Data stored on a hard disc or the like of a computer can be transferred to and recorded by a data streamer or data recorder once a day, so as to protect or back up the data. For this operation, analog audio tape recorders have been used in certain cases. However, analog tape recorders have disadvantages in that they need a considerable amount of magnetic tape for recording, and they operate at a relatively low data transferring rate upon recording, so that it takes a long time to transfer and record such data information. Moreover, analog tape recorders have further problems, for example the starting point of a desired portion of the recorded data information cannot be rapidly searched for.

Thus, to overcome the above-mentioned problems, it has been proposed to utilise a helical-scan type digital audio tape recorder (DAT) using a rotary head as a data recorder. Such data recorders utilising a DAT are described in European Patent Applications EP-A-0 272 130, EP-A-0 286 412, EP-A-0 297 809 and EP-A-0 300 732.

These documents constitute prior art according to Article 54(3) EPC.

To utilise a DAT as a data recorder, data transferred from a host computer is transformed in accordance with a DAT format before recording. In the DAT format, one frame is made up of two oblique tracks formed by one rotation of two heads having different azimuth angles. 16-bit pulse code modulation (PCM) audio data, which has been interleaved, and auxiliary sub-data are recorded in this one frame area as a unit. During recording, there are formed in each track a main area for recording the PCM data and a sub-area for recording the sub-data.

When the DAT is used as a data recorder, data sent from the computer is continuously recorded on a magnetic tape several times, that is so-called multiple writing is performed, in order to eliminate the influence of errors such as drop-out and to protect the data. When the data is multiply written, it is desirable for the signal processing to be facilitated.

In accordance with one aspect of this invention there is provided apparatus for recording digital signals containing main data and sub- data in each track of a plurality of tracks formed on a recording medium, wherein a predetermined number of tracks constitute a group and a plurality of groups are recorded on the medium, the apparatus comprising:
means for forming in each track a main area for recording the main data and a sub-area for recording the sub-data; and
means for recording in said sub-area an identification signal indicating whether or not the main data recorded in the main areas of a given group and the main data recorded in the main areas of an adjacent group are recordings of the same data.

In accordance with another aspect of this invention there is provided a method of recording digital signals containing main data and sub-data in each track of a plurality of tracks formed on a recording medium, wherein a predetermined number of tracks constitute a group and a plurality of groups are recorded on the medium, the method comprising the steps of:
forming in each track a main area for recording the main data and a sub-area for recording the sub-data; and
recording in said sub-area an identification signal indicating whether or not the main data recorded in the main areas of a given group and the main data recorded in the main areas of an adjacent group are recordings of the same data.

A preferred embodiment of the present invention, to be described in greater detail hereinafter, provides a data recorder capable of facilitating signal processing such that a signal indicating the divisions between groups of multiply-written data is recorded.

The identification signal can indicate whether the adjacent group having the same data precedes or is subsequent to the group containing the identification signal in question.

The invention will now be described by way of example with reference to the accompanying drawings, throughout which like parts are referred to by like references, and in which:
Figure 1 is a block diagram showing an embodiment of the present invention;
Figure 2 is a schematic view showing a DAT format;
Figure 3 is a view showing the data format of a main data block;
Figure 4 is a view showing a format of a main area for one frame;
Figures 5A and 5B are depictions of the data formats of even and odd numbered sub-code blocks, respectively;
Figure 6 is a view showing a data format of a pack of the sub-code block; and
Figure 7 is a view showing a recording pattern of a tape subjected to multiple writing.

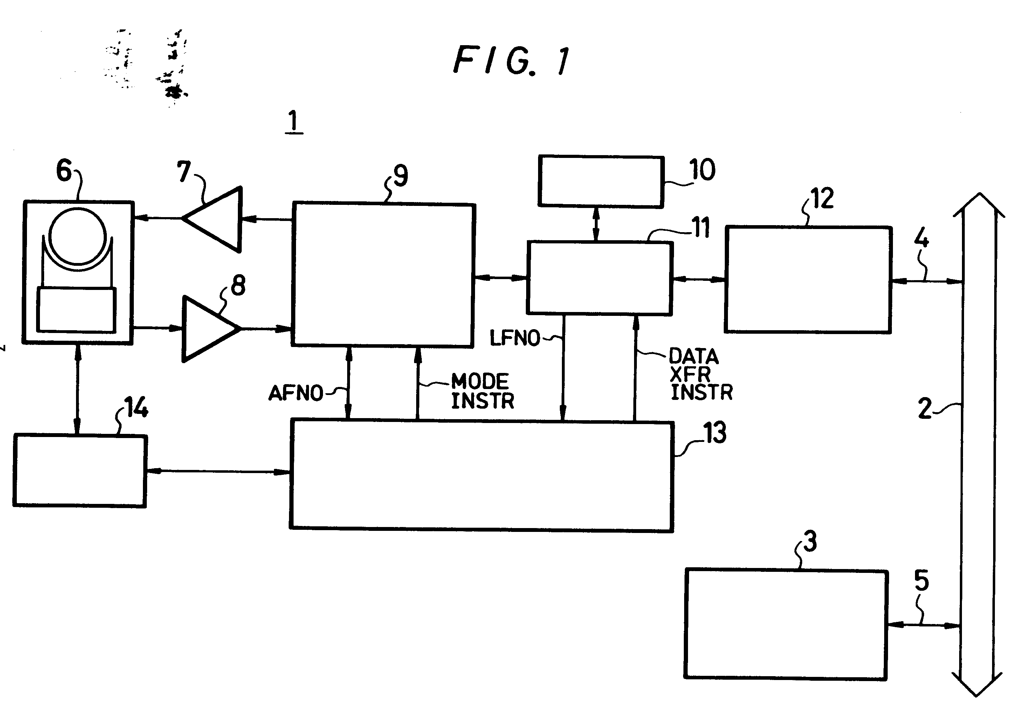

Figure 1 shows an arrangement in which a DAT 1 is used as a data recorder, the arrangement also including an interface bus 2, a host computer 3, and inner buses 4, 5. The DAT 1 includes a recording/reproducing section 6, a recording amplifier 7, a reproducing amplifier 8, a signal processing circuit 9, a random access memory (RAM) 10, a data controller 11, an interface board 12, a system controller 13 and a servo and motor drive circuit 14.

The system controller 13, the signal processing circuit 9 and the data controller 11 are arranged to exchange predetermined signals such as an absolute frame number AFNO, a mode instruction, a logical frame number LFNO, a data transfer instruction and the like.

Although this is not shown, the recording/reproducing section 6 is provided with a rotary head drum. A magnetic tape is wound around the drum over an angular range of about 90° and is fed by a capstan. The drum has two heads A and B having different azimuth angles. During one revolution of the drum, two oblique tracks are recorded on or reproduced from the tape.

Digital data supplied from the host computer 3 through the buses 5, 2 and 4 is input to the interface board 12, and is then subjected to predetermined signal processing in the data controller 11, the RAM 10, and the signal processing circuit 9 in accordance with instructions from the system controller 13. In this manner, conversion to the DAT format (described above) is performed. The converted signal is supplied to the recording/reproducing section 6 through the recording amplifier 7, and is recorded on the magnetic tape by the heads A and B.

The signal recorded on the magnetic tape can also be reproduced by the heads A and B. The reproduced signal is supplied to the signal processing circuit 9 through the reproducing amplifier 8. Digital data which is obtained by reconverting the reproduced signal in the signal processing circuit 9 is supplied to the host computer 3 through the data controller 11, the interface board 12 and the buses 4, 2 and 5.

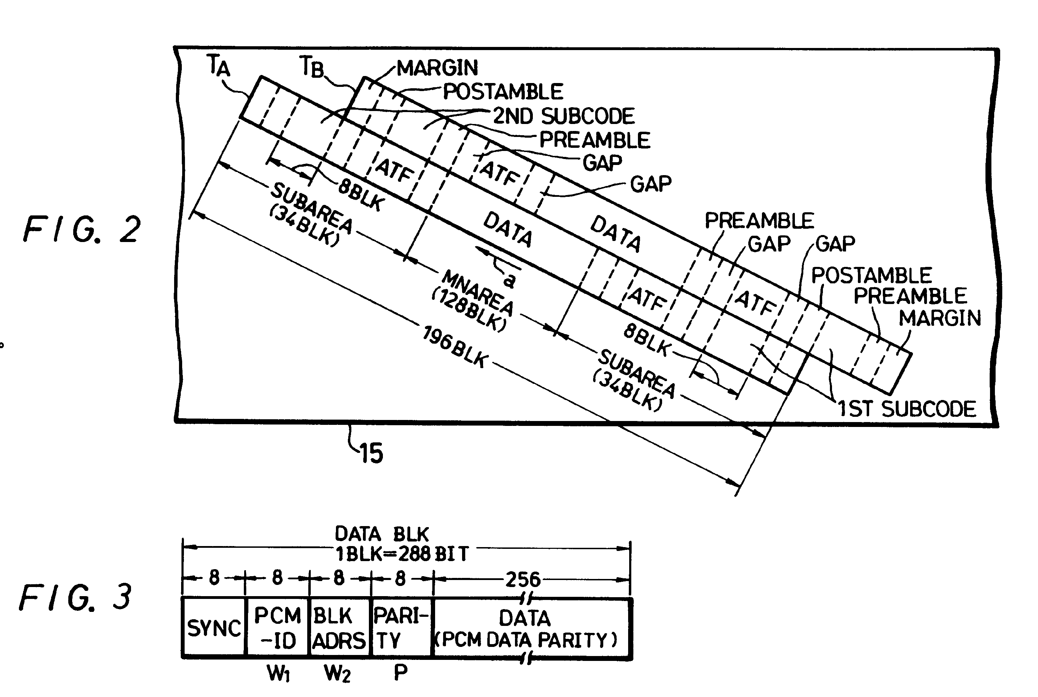

In the above apparatus, the DAT format which is used on the magnetic tape is as shown in Figure 2. During one revolution of the heads A and B, two oblique tracks TA and TB are formed on a tape 15 starting from its lower side, as indicated by an arrow a.

The two tracks TA and TB constitute one frame. Each of the tracks TA and TB consists of 196 blocks, and one block consists of 288 bits. 34 blocks at each end portion serve as a sub area, and 128 central blocks serve as a main area.

Each sub area is further divided into sections. More specifically, there are provided, from the lower end of the track, a margin section, a phase lock loop (PLL) preamble section of a sub-code, a first sub-code section, a postamble section, a gap section for a block section, a tracking (ATF) signal section, a gap section between adjacent blocks, a PLL preamble of data, a gap section between adjacent blocks, an ATF signal section, a gap section between adjacent blocks, a PLL preamble section of a sub-code, a second sub-code section, a postamble section, a second sub-code section constituted by 8 blocks, and other blocks which are constituted by predetermined numbers of blocks. It should be noted that in Figure 2 the measure of the lengths of the sections is not to scale.

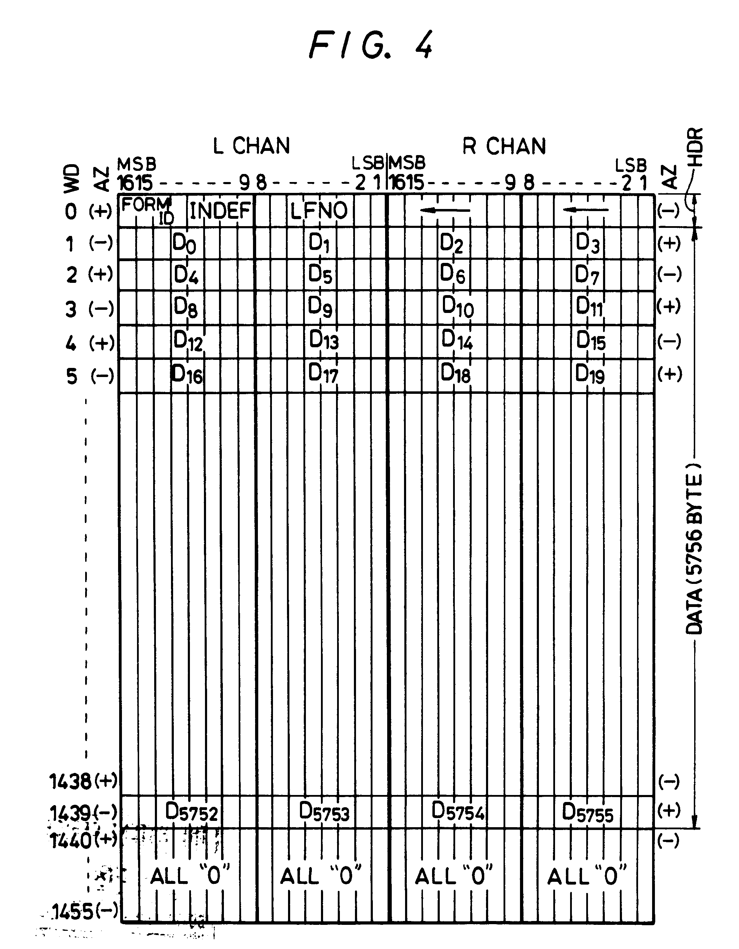

The main area consists of 128 data blocks. As shown in Figure 3, each block is constituted by an 8-bit synchronising (sync) signal, an 8-bit pulse code modulation identification (PCM-ID) signal W1, an 8-bit block address W2 and an 8-bit parity, and main data is stored in the following 256-bit section. The main data is 16-bit PCM data for left L and right R channels when an audio signal is processed. The 16-bit main data is interleaved in the main areas of the tracks TA and TB (one frame) together with the parity. In this case, in the main areas in one frame, about 5760 bytes of data are recorded. When the DAT is used as a data recorder, the data sent from the host computer 3 is converted into 16-bit data and is processed in the same manner as the PCM data. This data is formatted as shown in Figure 4 and is recorded in the main areas comprising one frame.

More specifically, in Figure 4, the above-mentioned 5760 bytes are divided into 1440 words (0 to 1439) each consisting of 4 bytes (32 bits). These words are divided into 16-bit (2-byte) L and R channels to correspond to the audio signal. In this format, a header portion is provided in the first word (4 bytes). Four bits near the most significant bit (MSB) of the first half byte in the L channel in this header portion serve as a format ID indicating a format of the data recorder, and the remaining 4 bits of this byte are indefinite. The remaining one byte in this L channel is used as a logical frame number (LFNO) area. Each 8-bit LFNO area provides a binary value indicating one of a series of numbers (1 to 23) of frames. The frames are organised in units or groups of 23 frames. In the R channel in the header portion, the same data as that in the L channel is provided.

A total of 5756 bytes of a data portion is provided in the following words "1" to "1439", and data signals from the host computer 3 are sequentially stored in respective words in units of 4 bytes each.

The logical frame number LFNO will now be described. Each LFNO area indicates one of the serial numbers 1 to 23 of the frames in each unit of 23 frames. That is, the frame numbers 1 to 23 repeatedly appear every group of 23 frames. Since a unit numbered by such LFNOs is used, a division for each predetermined amount of data can be easily detected, and signal processing can be facilitated.

The data formats in the first and second sub-code sections in the sub area will now be described. Each of the first and second sub-code sections consists of 8 sub-code blocks, and can record 2048 bits of data.

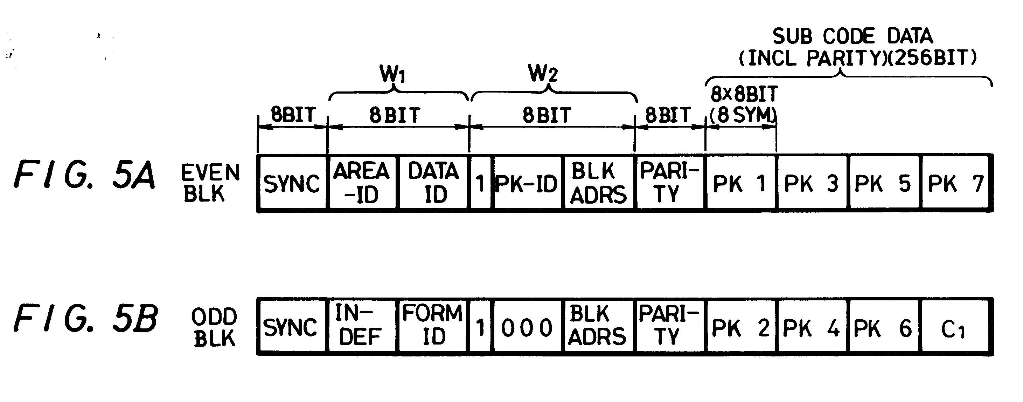

Figures 5A and 5B show, respectively, the constructions of the even-numbered sub-code blocks (EVEN blocks) and the odd-numbered sub-code blocks (ODD blocks), in each of which a synchronising signal, the areas W1 and W2 and a parity, respectively formed of eight bits, and 256 bits of sub-code data including a parity, are located in this order. The sub-code data is divided into four packs formed of 64 (8 x 8) bits (eight symbols), respectively.

As shown in Figures 5A and 5B, the contents of the areas W1 and W2 in the EVEN block are different from those in the ODD block, and the packs in the EVEN and ODD blocks are alternately numbered from "1" to "7". The eighth pack is assigned to record an error detecting code C1.

The area W1 of the EVEN block consists of a 4-bit area ID and a 4-bit data ID, and the area W2 thereof consists of an upper bit "1", a 3-bit pack ID, and a 4-bit block address. The area W1 in the ODD block consists of a 4-bit indefinite portion, and a 4-bit format ID, and the area W2 thereof consists of an upper bit "1", a 3-bit all "0" code, and a 4-bit block address.

Each of the packs "1" to "7" is divided into 8 words in units of 8 bits. Each word includes, together with a parity, various codes such as a code indicating a read-in area of a recording start portion on a tape, a code indicating a read-out area of a recording end portion, a code indicating a recording date, an absolute frame number, a logical frame number and the like.

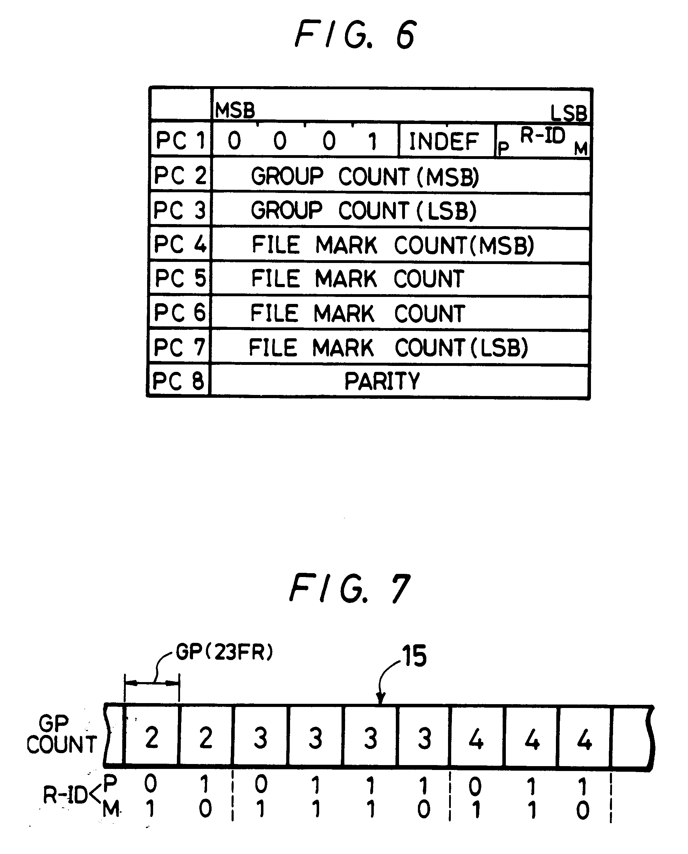

Figure 6 shows a format of the pack "1" of the seven packs. The pack "1" consists of eight 8-bit words, PC1 to PC8. The upper four bits of the word PC1 are assigned to a pack number (in this case, "0001" indicating pack "1"), and the next 2 bits are indefinite. The following lower two bits (P,M) provide a repeat ID (R-ID) associated with multiple writing according to the present arrangement. The following words PC2 and PC3 (16 bits) are assigned to a group count. The group count is a value obtained by counting the number of groups of frames from the leading end of a tape. When data is multiply written, the identical group count value is provided to the multiply-written portion. The following words PC4 to PC7 (32 bits) are assigned to a file mark count. The file mark count is a value obtained by counting the number of file marks indicating divisions of a predetermined amount of data sent from the host computer. The word PC8 is assigned to a parity for the words PC1 to PC7.

The R-ID will now be described with reference to Figure 7. The R-ID is represented by two bits, P and M. When the P bit is "1", this indicates that data in the main area of a group to which the frame including the pack "1" belongs is the same as the main area data of the immediately preceding group. When these data are not the same, the P bit is "0". When the M bit is "1", this indicates that data in the main area of a group to which the frame including the pack "1" belongs is the same as the main area data of the group after the corresponding group. When these data are not the same, the M bit is "0".

Figure 7 shows the relationship between data multiply written on the tape 15 in units of groups and the R-IDs. Data of a group count "2" is double-written, data of a group count "3" is four-times written, and data of a group count "4" is triple-written. Therefore, the P bit of the R-ID of the first group of the multiply-written portions is set to be "0", the M bit of the R-ID of the last group is set to be "0", and all of the P and M bits of the R-IDs of the other groups are set to be "1". The R-IDs are written in all of the 23 frames constituting this group.

Therefore, when the tape 15 having a recording pattern as shown in Figure 7 is reproduced, the R-IDs are detected from the sub area, so as to determine whether or not the data is changed in the next group. Thus, the division of the multiply-written portion can be detected, and it can easily be determined whether or not the following data can be sent, resulting in convenient signal processing.

Accordingly, since a signal such as an R-ID indicating the division of multiply-written portions is recorded in the sub area, signal processing can be facilitated.

## Claims

1. Apparatus for recording digital signals containing main data and sub-data in each track of a plurality of tracks (TA, TB) formed on a recording medium (15), wherein a predetermined number of tracks constitute a group and a plurality of groups are recorded on the medium (15), the apparatus comprising:
means for forming in each track (TA or TB) a main area for recording the main data and a sub-area for recording the sub-data; and
means for recording in said sub-area an identification signal (R-ID) indicating whether or not the main data recorded in the main areas of a given group and the main data recorded in the main areas of an adjacent group are recordings of the same data.

2. Apparatus according to claim 1, wherein said identification signal (R-ID) comprises a first identification signal (P) indicating whether or not the main data recorded in the main areas of the given group having said identification signal and the main data recorded in the main areas of a preceding adjacent group are recordings of the same data, and a second identification signal (M) indicating whether or not the main data recorded in the main areas of the given group having said identification signal and the main data recorded in the main areas of a subsequent adjacent group are recordings of the same data.

3. Apparatus according to claim 1 or claim 2, wherein the recording apparatus comprises a digital audio tape recorder (1).

4. Apparatus according to claim 1, claim 2 or claim 3, comprising means for detecting a division of a multiple-recording in each group of said main data recorded in said main area by detecting said identification signal (R-ID) in a recording mode.

5. A method of recording digital signals containing main data and sub-data in each track of a plurality of tracks (TA, TB) formed on a recording medium (15), wherein a predetermined number of tracks constitute a group and a plurality of groups are recorded on the medium (15), the method comprising the steps of:
forming in each track (TA or TB) a main area for recording the main data and a sub-area for recording the sub-data; and
recording in said sub-area an identification signal (R-ID) indicating whether or not the main data recorded in the main areas of a given group and the main data recorded in the main areas of an adjacent group are recordings of the same data.

6. A method according to claim 5, wherein said identification signal (R-ID) comprises a first identification signal (P) indicating whether or not the main data recorded in the main area of the given group having said identification signal and the main data recorded in the main area of a preceding adjacent group are recordings of the same data, and a second identification signal (M) indicating whether or not the main data recorded in the main area of the given group having said identification signal and the main data recorded in the main area of a subsequent adjacent group are recordings of the same data.

7. A method according to claim 5 or claim 6, wherein the recording step utilises a digital audio tape recorder (1).

8. A method according to claim 5, claim 6 or claim 7, comprising the steps of detecting a division of a multiple-recording in each group of said main data recorded in said main area by detecting said identification signal (R-ID) in a recording mode.

## Patentansprüche

1. Vorrichtung zum Aufzeichnen digitaler Signale, die Hauptdaten und Nebendaten in jeder Spur einer Vielzahl von Spuren (TA, TB), welche auf einem Aufzeichnungs-Medium (15) ausgebildet sind, enthalten, wobei eine vorbestimmte Anzahl von Spuren eine Gruppe bilden und eine Vielzahl von Gruppen auf dem Medium (15) aufgezeichnet werden, welche Vorrichtung umfaßt:
ein Mittel zum Bilden eines Hauptbereichs zum Aufzeichnen der Hauptdaten und eines Nebenbereichs zum Aufzeichnen der Nebendaten in jeder Spur (TA, TB) und
ein Mittel zum Aufzeichnen eines Kennungssignals (R-ID) in dem Nebenbereich, das anzeigt, ob die Hauptdaten, die in den Hauptbereichen einer gegebenen Gruppe aufgezeichnet sind, und die Hauptdaten, die in den Hauptbereichen einer benachbarten Gruppe aufgezeichnet sind, Aufzeichnungen derselben oder nicht derselben Daten sind.

2. Vorrichtung nach Anspruch 1, bei der das Kennungssignal (R-ID) ein erstes Kennungssignal (P) umfaßt, das anzeigt, ob die Hauptdaten, die in den Hauptbereichen der gegebenen Gruppe aufgezeichnet sind, welche das Kennungssignal aufweist, und die Hauptdaten, die in den Hauptbereichen einer vorhergehenden benachbarten Gruppe aufgezeichnet sind, Aufzeichnungen derselben Daten oder nicht derselben Daten sind.

3. Vorrichtung nach Anspruch 1 oder 2, bei der die Vorrichtung zum Aufzeichnen aus einem digitalen Audio-Magnetbandrecorder (1) besteht.

4. Vorrichtung nach Anspruch 1, 2 oder 3, die ein Mittel zum Erfassen einer Unterteilung einer Mehrfachaufzeichnung in jeder Gruppe der Hauptdaten, die in dem Hauptbereich aufgezeichnet sind, durch Erfassen des Kennungsignals (R-ID) in einem Aufzeichnungsbetriebszustand umfaßt.

5. Verfahren zum Aufzeichnen digitaler Signale, die Hauptdaten und Nebendaten in jeder Spur einer Vielzahl von Spuren (TA, TB), welche auf einem Aufzeichnungs-Medium (15) ausgebildet sind, enthalten, wobei eine vorbestimmte Anzahl von Spuren eine Gruppe bilden und eine Vielzahl von Gruppen auf dem Medium (15) aufgezeichnet werden, welches Verfahren Schritte umfaßt zum
Bilden eines Hauptbereichs zum Aufzeichnen der Hauptdaten und eines Nebenbereichs zum Aufzeichnen der Nebendaten in jeder Spur (TA, TB) und
Aufzeichnen eines Kennungssignals (R-ID) in dem Nebenbereich, das anzeigt, ob die Hauptdaten, die in den Hauptbereichen einer gegebenen Gruppe aufgezeichnet sind, und die Hauptdaten, die in den Hauptbereichen einer benachbarten Gruppe aufgezeichnet sind, Aufzeichnungen derselben oder nicht derselben Daten sind.

6. Verfahren nach Anspruch 5, bei dem das Kennungssignal (R-ID) ein erstes Kennungssignal (P) umfaßt, das anzeigt, ob die Hauptdaten, die in den Hauptbereichen der gegebenen Gruppe aufgezeichnet sind, welche das Kennungssignal aufweist, und die Hauptdaten, die in den Hauptbereichen einer vorhergehenden benachbarten Gruppe aufgezeichnet sind, Aufzeichnungen derselben Daten oder nicht derselben Daten sind.

7. Verfahren nach Anspruch 5 oder 6, bei dem der Schritt zum Aufzeichnen einen digitalen Audio-Magnetbandrecorder (1) benutzt.

8. Verfahren nach Anspruch 5, 6 oder 7, das die Schritte zum Erfassen einer Unterteilung einer Mehrfachaufzeichnung in jeder Gruppe der Hauptdaten, die in dem Hauptbereich aufgezeichnet sind, durch Erfassen des Kennungsignals (R-ID) in einem Aufzeichnungsbetriebszustand umfaßt.

## Revendications

1. Appareil pour enregistrer des signaux numériques contenant des données principales et des sous-données sur chaque piste d'une pluralité de pistes (TA,TB) formées sur un support d'enregistrement (15), dans lequel un nombre prédéterminé de pistes constituent un groupe et une pluralité de groupes sont enregistrés sur le support (15), l'appareil comprenant:
un moyen pour former sur chaque piste (TA ou TB) une zone principale pour l'enregistrement des données principales et une sous-zone pour l'enregistrement des sous-données; et
un moyen pour enregistrer dans ladite sous-zone un signal d'identification (R-ID) indiquant si les données principales enregistrées dans les zones principales d'un groupe donné et les données principales enregistrées dans les zones principales d'un groupe voisin sont ou non des enregistrements des mêmes données.

2. Appareil selon la revendication 1, dans lequel ledit signal d'identification (R-ID) comprend un premier signal d'identification (P) indiquant si les données principales enregistrées dans les zones principales du groupe donné comportant ledit signal d'identification et les données principales enregistrées dans les zones principales d'un groupe voisin précédent sont ou non des enregistrements des mêmes données, et un second signal d'identification (M) indiquant si les données principales enregistrées dans les zones principales du groupe donné comportant le dit signal d'identification et les données principales enregistrées dans les zones principales d'un groupe voisin suivant sont ou non des enregistrements des mêmes données.

3. Appareil selon l'une quelconque des revendications 1 et 2, dans lequel l'appareil d'enregistrement comprend un enregistreur sur bande audionumérique (1).

4. Appareil selon l'une quelconque des revendications 1 à 3, comprenant un moyen pour détecter une division d'un enregistrement multiple dans chaque groupe desdites données principales enregistrées dans ladite zone principale en détectant ledit signal d'identification (R-ID) dans un mode d'enregistrement.

5. Procédé d'enregistrement de signaux numériques contenant des données principales et des sous-données sur chaque piste d'une pluralité de pistes (TA,TB) formées sur un support d'enregistrement (15), dans lequel un nombre prédéterminé de pistes constituent un groupe et une pluralité de groupes sont enregistrés sur le support (15), le procédé comprenant les étapes qui consistent à:
former sur chaque piste (TA ou TB)une zone principale pour enregistrer les données principales et une sous-zone pour enregistrer les sous-données; et à
enregistrer dans ladite sous-zone un signal d'identification (R-ID) indiquant si les données principales enregistrées dans les zones principales d'un groupe donné et les données principales enregistrées dans les zones principales d'un groupe voisin sont ou non des enregistrements des mêmes données.

6. Procédé selon la revendication 5, dans lequel ledit signal d'identification (R-ID) comprend un premier signal d'identification (P) indiquant si les données principales enregistrées dans la zone principale du groupe donné comportant ledit signal d'identification et les données principales enregistrées dans la zone principale d'un groupe voisin précédent sont ou non des enregistrements des mêmes données, et un second signal d'identification (M) indiquant si les données principales enregistrées dans la zone principale du groupe donné comportant ledit signal d'identification et les données principales enregistrées dans la zone principale d'un groupe voisin suivant sont ou non des enregistrements des mêmes données.

7. Procédé selon l'une quelconque des revendications 5 et 6, dans lequel l'étape d'enregistrement met en oeuvre un enregistreur sur bande audionumérique (1).

8. Procédé selon l'une quelconque des revendications 5 à 7, comprenant les étapes qui consistent à détecter une division d'un enregistrement multiple dans chaque groupe desdites données principales enregistrées dans ladite zone principale en détectant ledit signal d'identification (R-ID) dans un mode d'enregistrement.
